# EUROPEAN PATENT APPLICATION

(11) **EP 4 679 355 A1**
(43) Date of publication of application: **14.01.2026**
(21) Application number: 24771116.1
(22) Date of filing: 07.03.2024
(51) Int. Cl.: G06Q 50/10, H04N 21/4784, H04N 21/4788, G06Q 30/02

(54) **MISSION MANAGEMENT METHOD IN IMAGE MEDIATION SERVICE, AND DEVICE THEREFOR**

(30) Priority: 10.03.2023 KR 20230031923; 06.03.2024 KR 20240031904
(71) Applicant: Hyperconnect LLC, Seoul 06164 (KR)
(72) Inventor: UHM, Keun Ho, Seoul 06164 (KR)
(74) Representative: Haseltine Lake Kempner LLP
(86) International application number: PCT/KR2024/002958
(87) International publication number: WO 2024/191116

(57) **Abstract**

Disclosed are a method for mission management in a video intermediating service and an apparatus therefor. A mission management method according to one embodiment may comprise: a step wherein a session for video intermediating is established between a host terminal and a plurality of user terminals; a step wherein a mission request is received with respect to an account of the host terminal from a first user terminal among the plurality of user terminals; a step wherein a mission is generated based on the mission request and the mission's reward information is initialized; a step wherein a funding participation request for the mission is received from a second user terminal among the plurality of user terminals; a step wherein an account of the second user terminal is added as a funding participant of the mission; a step wherein the reward information is updated owing to the adding of the funding participant of the mission; and a step wherein, if the mission is completed, then a reward is granted to the host terminal account that corresponds to the reward information.

## Description

### [Technical Field]

The present invention relates to a method for managing missions for a host terminal in a video intermediating service provided between a host terminal and a user terminal, and an apparatus therefor.

### [Background Art of the Invention]

As communication technology has advanced and electronic devices have become smaller, personal terminals have become widely available to general consumers; using these devices, individuals log on to video intermediating platforms to exchange video and voice via video calls so as to interact and converse with one another.

Recently, in particular, it has become possible for one host to interact with unspecified users through live video calls, which has made it easier for fans to be able to connect with stars or influencers.

During such a video call, in some cases users assign a mission to the host as a means of communication and as a means of requesting a desired action from the host. However, because most video calls with one host are made with a plurality of users, if a 1:1 interaction continues in which a particular user assigns a mission and the host carries it out, the remaining users may feel that communication is not happening properly.

Moreover, even if a plurality of missions are assigned to a host and among those missions is one that the host specifically desires to complete, the remaining users have no way to express such a demand, which makes it difficult for a host to determine which mission is popular among the users.

Moreover, because the reward for success of a mission is determined at the time the mission is assigned, if the reward for the mission is low compared to the mission's popularity or difficulty, then this may result in the host avoiding that mission.

### [Summary of Invention]

### [Problem to be Solved]

The present invention has been proposed to solve the above-described problems; it has the object of providing an apparatus and a method of managing a mission assigned to a host at the same time that a video is being intermediated between a host terminal and a user terminal, so that a plurality of users are able to participate in funding.

The present invention also has the object of incentivizing the host to actively broadcast, by enabling the host terminal to proactively propose a mission to the terminals of users watching the video.

The technical problems to be solved by the present invention are not limited to the technical problem set forth above; further technical problems can be inferred from the embodiments below.

### [Means of Solving Problem]

The mission management method according to one disclosed embodiment is carried out on a server that provides a video intermediating service, and comprises: a step wherein a session for video intermediating is established between a host terminal and a plurality of user terminals; a step wherein a mission request is received with respect to an account of the host terminal from a first user terminal among the plurality of user terminals; a step wherein a mission is generated based on the mission request and the mission's reward information is initialized; a step wherein a funding participation request for the mission is received from a second user terminal among the plurality of user terminals; a step wherein an account of the second user terminal is added as a funding participant of the mission; a step wherein the reward information is updated owing to the adding of the funding participant of the mission; and a step wherein, if the mission is completed, then a reward is granted to the host terminal account that corresponds to the reward information.

According to one embodiment, the step wherein the mission request is received may comprise a step wherein a first type of gift for the account of the host terminal is received from the account of the first user terminal.

According to one embodiment, the step wherein the funding participation request for the mission is received may comprise a step wherein a second type of gift for the mission is received from the account of the second user terminal, and the step wherein the reward information is updated comprises a step wherein rewards are summed corresponding to the gifts of the second type accumulated thus far.

According to one embodiment, the step wherein the funding participation request for the mission is received may comprise: a step wherein information regarding a funding amount entered from the second user terminal account for the mission is received, the step wherein the reward information is updated may comprise a step wherein rewards are summed corresponding to the thus entered amounts of funding that have been accumulated thus far.

According to one embodiment, the mission management method may further comprise a step wherein a request for withdrawal of participation in the mission is received from the second user terminal; and a step wherein the account of the second user terminal is deleted from the funding participants of the mission.

According to one embodiment, the step of updating the reward information may comprise: a step wherein, in response to the participation withdrawal request, the portion of the reward information that was updated when the second user terminal account was added as a funding participant of the mission is reverted to its state before the update.

According to one embodiment, the reward information may be provided by the server to terminals logged on to the session during the period in which the mission is included in a list of ongoing missions or a list of pending missions.

According to one embodiment, the mission management method may further comprise: a step wherein an acceptance signal or an abandonment signal for the mission is received from the host terminal; a step wherein if the acceptance signal is received, then the mission is switched from a pending mission list to an ongoing mission list; and a step wherein if the abandonment signal is received, the mission is deleted from the pending mission list.

According to one embodiment, the mission management method may further comprise a step wherein it is determined whether the mission request is valid, wherein this determining step may comprise: a step wherein, if no further new missions can be added to the pending mission list and the ongoing mission list, or the content of the mission overlaps with the content of a mission that is already included in the pending mission list or the ongoing mission list by at least a certain amount, then it is determined that the mission request is invalid.

According to one embodiment, the granting step may comprise: a step wherein a completion response for a mission included in the ongoing mission list is received from the host terminal; and a step wherein a reward is granted to the host terminal account that corresponds to the reward information at the time of receiving the completion response.

According to one embodiment, the mission management method may further comprise: a step wherein a request for withdrawal from a mission included in the pending mission list is received from the first user terminal; and a step wherein the mission is deleted from the pending mission list.

According to one embodiment, the mission management method may further comprise a step wherein, if the mission is completed, then a first graphic effect configured according to the mission request of the first user terminal is provided to a terminal logged on to the session.

According to one embodiment, the pending mission list may be sorted based on at least one of the reward of each mission included in the pending mission list, the number of participating accounts, and the time point at which a mission request for each mission was received, and the ongoing mission list may be sorted based on at least one of the reward of each mission included in the ongoing mission list, the number of participating accounts, and the time point at which an acceptance signal for each mission was received.

According to one embodiment, in the mission, according to the mission request of the first user terminal, a time limit may be set in which the host can accept the mission, starting from the time the mission is included in the pending mission list, and the time limit of the mission may be updated if the server receives a funding participation request for the mission from the second user terminal.

According to one embodiment, the mission management method may further comprise: a step wherein a history of host terminal mission acceptances or a history of second user terminal mission participations is stored; and a step wherein, based on the host terminal mission acceptance history or the second user terminal mission participation history, a new mission is recommended to at least a portion of the host terminal or the plurality of user terminals, or the list of pending missions or the list of ongoing missions is sorted.

According to another disclosed embodiment, the mission management method is carried out on a server that provides a video intermediating service, and may comprise: a step wherein a session for video intermediating is established between a host terminal and a plurality of user terminals; a step wherein, in accordance with the request of the host terminal, a mission is generated and reward information for the mission is initialized; a step wherein a funding participation request for the mission is received from a user terminal among the plurality of user terminals; a step wherein an account of the user terminal is added as a funding participant of the mission; a step wherein the reward information is updated owing to the adding of the funding participant of the mission; and a step wherein, when the mission is completed, a reward is granted to the host terminal account that corresponds to the reward information.

According to another disclosed embodiment, the mission management method is performed on a host terminal using a video intermediating service, and may comprise: a step of logging on to a session established by a server for intermediating video between a host terminal and a plurality of user terminals; and a step wherein a request is transmitted to the server to generate a mission for an account of the host terminal.

According to a further disclosed embodiment, the mission management method is carried out on a user terminal using a video intermediating service, and may comprise: a step of logging on to a session established by a server for intermediating video between a host terminal and a plurality of user terminals; and a step wherein a funding participation request for at least some of the missions generated for the account of the host terminal is transmitted to the server.

According to one disclosed embodiment, a server that manages missions in a video intermediating service, may comprise a transceiver, a memory that stores commands, and a processor: wherein the processor may be configured to: connect to the transceiver and the memory, and establish a session for intermediating video between a host terminal and a plurality of user terminals; receive a mission request with respect to an account of the host terminal from a first user terminal among the plurality of user terminals; generate a mission based on the mission request and initialize the mission's reward information; receive a funding participation request for the mission from a second user terminal among the plurality of user terminals; add an account of the second user terminal as a funding participant of the mission; update the reward information according to the adding of the funding participant of the mission; and when the mission is completed, grant a reward to the host terminal account that corresponds to the reward information.

According to another disclosed embodiment, a server that manages missions in a video intermediating service may comprise a transceiver, a memory that stores commands, and a processor: wherein the processor may be configured to: connect to the transceiver and the memory, and establish a session for intermediating video between a host terminal and a plurality of user terminals; generate a mission according to the mission request and initialize the mission's reward information; receive a funding participation request for the mission from a user terminal among the plurality of user terminals; add an account of the user terminal as a funding participant of the mission; update the reward information according to the adding of the funding participant of the mission; and when the mission is completed, grant a reward to the host terminal account that corresponds to the reward information.

In addition, a computer-readable recording medium may be provided, on which is recorded a program for performing a mission management method according to the present invention.

Other specific details of embodiments are included in the detailed description and the drawings.

### [Effect of Invention]

According to the present invention, user preference can be reflected in missions by making it possible for a plurality of users to participate in funding for missions assigned to a host while a video is being intermediated between the host terminal and the user terminals, the reward obtained by the host may be increased, and the communication between the host and the users may be made more active.

In addition, according to the present invention, the host may be incentivized to actively proceed with the broadcast, by enabling the host terminal to proactively propose a mission to the terminals of the users watching a video.

In addition, according to the present invention, the efficiency of data management and resource management related to video intermediating may be improved because similar missions may be prevented from being generated redundantly, and interest in a particular mission may be recorded cumulatively.

The effects of the invention are not limited to the effects mentioned above; further effects not mentioned will be plainly apparent to a person of ordinary skill in the art based on what is recited in the claims.

### [Brief Description of the Drawings]

FIG. 1 is a schematic diagram that includes apparatuses for mission management in a video intermediating service according to one embodiment.
FIG. 2 is a block diagram showing a server that manages a mission in a video intermediating service, according to one embodiment.
FIG. 3 is a block diagram showing a terminal that manages a mission in a video intermediating service, according to one embodiment.
FIGS. 4a through 4h are exemplary drawings of a screen on a user terminal on which video is intermediated according to one embodiment.
FIGS. 5a to 5g are exemplary drawings of screens on a host terminal on which video is intermediated according to one embodiment.
FIG. 6 is a flowchart illustrating a mission management method on a server according to one embodiment.
FIG. 7 is a flowchart illustrating a mission management method on a server according to another embodiment.
FIG. 8 is a flowchart illustrating a mission management method on a user terminal according to one embodiment.
FIG. 9 is a flowchart illustrating a mission management method on a host terminal according to one embodiment.

### [Best Mode of Implementing the Invention]

Below, specific embodiments are explained with reference to the drawings. The detailed description below is provided in order to assist in a comprehensive understanding of the methods, apparatus, and/or systems described in the present specification. However, this is merely illustrative, and the disclosed embodiments are not limited thereto.

In describing the embodiments, if a detailed description of the relevant known art is judged to unnecessarily obscure the gist of the disclosed embodiments, then it may be omitted. Also, the terms used below are terms defined in view of functionality within the disclosed embodiments; this may differ depending on the intention or custom, etc., of users or operators. Therefore, the definition thereof must be determined based on the overall content of the present specification. The terms used in the detailed description are solely for the purpose of describing embodiments, and should not be considered limiting. Unless clearly used otherwise, expressions in the singular form encompass the meaning of the plural form. In the present description, expressions such as "comprising" or "furnished with" are intended to indicate certain features, numbers, steps, operations, elements, portions or combinations thereof, and should not be construed to exclude the presence or possibility of one or more other features, numbers, steps, operations, elements, portions or combinations thereof, other than those described.

The terms used in the embodiments have been selected from conventionally used terms as much as possible considering the functions of the present invention, but this may vary depending on the intent or precedents of technicians working in the field, the emergence of new technologies, and the like. Additionally, in some particular cases, terms have been arbitrarily selected by the applicant; in such cases, the meaning thereof will be described in detail in the relevant portion of the description. Therefore, the terms used in the present invention must be defined based on the meaning of the terms and the overall content of this disclosure, rather than simply based on the names of the terms.

When a portion of a specification is said to "comprise" a component, this does not mean that it excludes other components, but rather that it may further comprise other components, unless otherwise stated. Additionally, terms such as "... part," "... module," and the like, as set forth in the specification, refer to a unit that processes at least one function or operation, which may be implemented by hardware or software, or a combination of hardware and software; in practical operation, unlike the examples shown, they may not be clearly distinguished.

The expression "at least one of a, b, and c" as used throughout the specification may encompass "only a," "only b," "only c," "a and b," "a and c," "b and c," or "all of a, b, and c."

The "terminal" mentioned below may be implemented as a computer or portable terminal capable of accessing a server or another terminal via a network. "Computer" in this case may encompass, for example, a notebook, desktop, or laptop on which a web browser is loaded, and "portable terminal" may encompass for example, a wireless communication device that ensures portability and mobility, such as a communication-based terminal such as IMT (International Mobile Telecommunication), CDMA (Code Division Multiple Access), W-CDMA (W-Code Division Multiple Access), LTE (Long Term Evolution), and any sort of handheld-based wireless communication device such as a smartphone, tablet PC, or the like.

In the following description, terms such as "transmission," "communication," "sending," "receiving," and other similar expressions refer not only to the direct delivery of a signal or information from one component to another, but also to delivery via other components; In particular, "transmitting" or "sending" a signal or information to a component indicates the final destination of that signal or information and does not imply a direct destination. This also applies in the same way to "receiving" a signal or information. Also, in the present specification, when 2 or more pieces of data or information are described as "related," it means that when one piece of data (or information) is obtained, at least a portion of the other piece of data (or information) may be obtained on that basis.

Additionally, although terms such as first, second, and the like may be used to describe various components, the components should not be considered to be limited by these terms. These terms may be used for the purpose of distinguishing one component from another. For example, without departing from the claimed scope of the present invention, a first component may be renamed as a second component, and likewise a second component may be renamed as a first component.

In describing the embodiments, the description of technical content will be omitted that is widely known in the technical field to which the present invention belongs and does not relate directly to the present invention. This is done in order to omit unnecessary explanation in order to convey the gist of the present invention more clearly.

For the same reason, some components in the attached drawings are exaggerated, omitted, or shown schematically. Additionally, the size of each component does not wholly reflect its actual size. In each drawing, the same reference numbers are assigned to identical or corresponding components.

The advantages and characteristics of the present invention, and the method by which these are achieved, will become clear upon referring to the embodiments described in detail below, in combination with the attached drawings. However, the present invention is not limited to the embodiments set forth below, but may be implemented in various different forms; these embodiments are provided only to complete the disclosure of the present invention, and to fully inform a person of ordinary skill in the art to which the invention pertains regarding the scope of the invention; the present invention is defined only by the scope of the claims. Throughout the specification, the same reference symbols denote the same components.

It will be understood that each block of the process flowcharts, and combinations of the flowcharts, may be carried out by means of computer program instructions. These computer program instructions may be loaded in a processor of a general-purpose computer, a special-purpose computer, or other programmable data processing device, such that when the processor of the computer or other programmable data processing device executes the instructions, a means is generated for carrying out the functions described in the flowchart block(s). These computer program instructions may also be stored in a computer-usable or computer-readable memory that may direct a computer or other programmable data processing device to implement a function in a particular way; consequently, the instructions stored in the computer-usable or computer-readable memory may also produce an article of manufacture that contains an instruction means for carrying out the function described in the flowchart block(s). Because the computer program instructions may also be loaded in a computer or other programmable data processing device, a series of operational steps may be carried out on the computer or other programmable data processing device to generate a computer-executable process, so that the instructions carried out on the computer or other programmable data processing device may also provide steps for executing the functions described in the flowchart block(s).

In addition, each block may represent a module, segment, or portion of code that comprises one or more executable instructions for executing a particular logical function(s). It should also be noted that in some alternative embodiments, it is possible for the functions mentioned in the blocks to occur out of order. For example, two blocks shown in succession may in fact be executed at substantially the same time, or depending on the respective functions of the blocks, they may sometimes be executed in reverse order.

Hereinbelow, one embodiment of the present invention will be described in detail, with reference to the attached drawings, so that a person of ordinary skill in the art of the field to which the present invention belongs may readily implement it. However, the present invention is not limited to the embodiment described here, and may be implemented in various different ways.

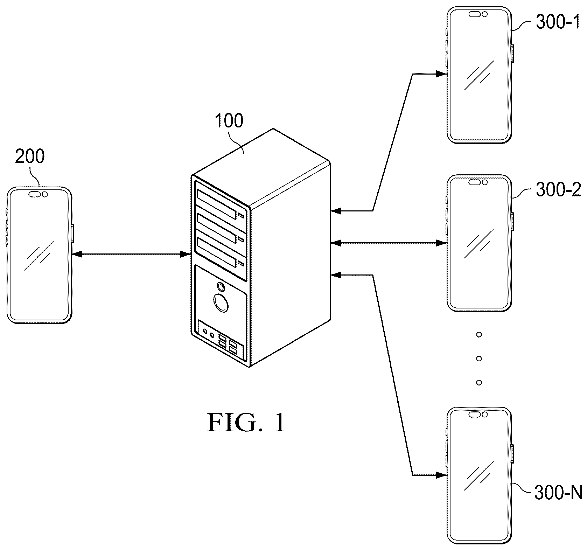

FIG. 1 is a schematic diagram that includes apparatuses for mission management in a video intermediating service according to one embodiment. Referring to FIG. 1, the video intermediating service may be provided via a network that comprises a server (100), a host terminal (200), and one or more user terminals (300-1, 300-2, ..., 300-N). Although FIG. 1 depicts three or more user terminals, this is to assist understanding; depending on the embodiment, the number of user terminals may be one or two, or may be three or more. A person of ordinary skill in the art to which the present embodiment relates will understand that other general-purpose components may be included in addition to the components depicted in FIG. 1.

The server (100) is able to receive data from at least one of the host terminal (200) and the one or more user terminals (300-1, 300-2, ..., 300-N), and to perform a calculation using the received data. Additionally, the server (100) may transmit the result of the calculation to at least one of the host terminal (200) and the one or more user terminals (300-1, 300-2, ..., 300-N).

The server (100) may receive a video intermediation request from at least one of the host terminal (200) and the one or more user terminals (300-1, 300-2, ..., 300-N). The server (100) may select a terminal from among the host terminal (200) and one or more user terminals (300-1, 300-2, ..., 300-N) as a subject for video intermediating.

The server (100) is able to intermediate a connection between selected terminals. For example, the server (100) may transmit connection information for one of the selected terminals to another terminal. According to one embodiment, the connection information for a terminal may comprise the IP address or port number of the terminal.

Upon a successful connection intermediation attempt by the server (100), a session for video intermediating may be established between the selected terminals. Each selected terminal may transmit video or audio through the established session; specifically, one terminal may encode video or voice into a digital signal and transmit the encoded output to the counterpart terminal, while the other terminal may decode the received video or voice.

The server (100), the host terminal (200), and the one or more user terminals (300-1, 300-2, ..., 300-N) may communicate with each other, or with other external devices, via a connected communication network. The communication network may comprise a local area network (LAN), a Wide Area Network (WAN), a Value Added Network (VAN), a mobile radio communication network, a satellite communication network, or a combination thereof; it is a data communication network in the broad sense, enabling seamless communication between each component entity depicted in FIG. 1, and may comprise wired internet, wireless internet, and mobile wireless communication networks. Wireless communication may include, for example, wireless LAN (Wi-Fi), Bluetooth, Bluetooth low energy, Zigbee, Wi-Fi Direct (WFD), Ultra Wideband (UWB), Infrared Data Association (IrDA), Near Field Communication (NFC), but is not limited thereto.

The following drawings provide a more detailed explanation in connection with the foregoing.

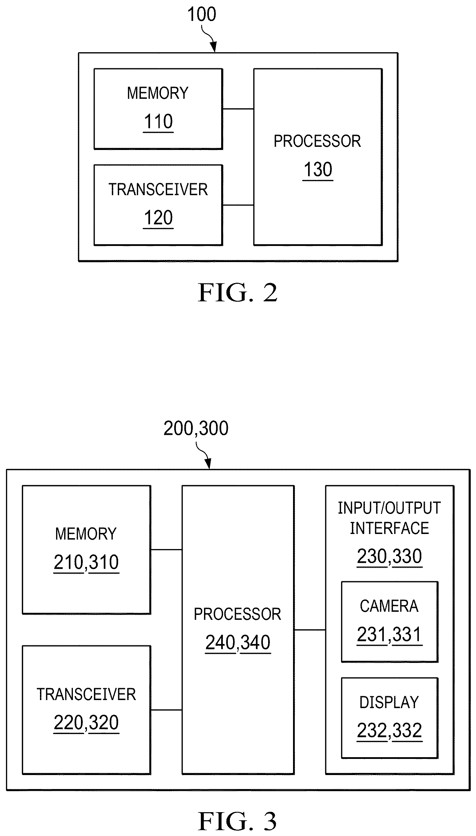

FIG. 2 is a block diagram showing a server that manages a mission in a video intermediating service, according to one embodiment. The server (100) according to one embodiment comprises a memory (110) that stores commands, a transceiver (120), and a processor (130). The transceiver (120) may receive a video intermediating request from at least one terminal. In this case, the terminal requesting video intermediating may perform operations substantially identical to those of the host terminal (200) or user terminals (300-1, 300-2, ..., 300-N).

The processor (130) is connected to the memory (110) and the transceiver (120), so that it can: establish a session for intermediating video between the host terminal (200) and the plurality of user terminals (300-1, 300-2, ..., 300-N); receive a mission request for the account of the host terminal (200) from a first user terminal among the plurality of user terminals (300-1, 300-2, ..., 300-N); generate a mission based on the mission request of the first user terminal, and initialize reward information for that mission; receive a funding participation request for that mission from a second user terminal among the plurality of user terminals (300-1, 300-2, ..., 300-N); add the account of the second user terminal as a funding participant of the mission; update the mission's reward information in accordance with adding the account of the second user terminal as a funding participant of the mission; and, if the mission is completed, grant to the account of the host terminal (200) a reward corresponding to the reward information of the completed mission.

In the present invention, a session for intermediating video between terminals is a session for video intermediating having a 1:1, 1:N, or M:N structure, and video intermediating by the session may be carried out as live streaming; depending on the embodiment, however, it may also be carried out as transmitting recorded video. In the present invention, a sub-session having a dependent relationship with the session may also be established between the host terminal (200) and at least some of the user terminals. A sub-session is a session for video intermediating in a 1:1 or 1:N structure; the terminal to be targeted for video intermediating in the sub-session may be decided by a selection by the host terminal after a user terminal requests sub-video-mediating, or it may be determined by selection by the host terminal without a request from a user terminal. The server (100) according to the disclosed embodiment may induce the host and the users to use a greater variety of video services by relationally and adaptively controlling data transmitted via a session and data transmitted via a sub-session.

In the present invention, the user accounts logged on to each respective user terminal (300-1, 300-2, ..., 300-N) may be classified as guest accounts and viewer accounts. "Guest account" refers to an account of a user participating in a session, whose video is exposed in an additional window distinct from the host's video during video transmission; "viewer account" refers to the remaining accounts of users participating in the session other than guest accounts. Accordingly, the user accounts may all be viewer accounts, or they may comprise at least one guest account.

According to one embodiment, the processor (130) may determine whether a mission request from the first user terminal is valid before generating the mission. If the mission request is valid, then the processor (130) may generate the mission; but if the mission request is invalid, then it may transmit a rejection response to the first user terminal. Various criteria may be established by which the processor (130) determines whether a mission request is valid. For example, if no further new missions may be added to the pending mission list and the ongoing mission list, then the processor (130) may determine that the mission request is invalid. By way of another example, if the content of the requested mission overlaps to a certain degree or more with the content of a mission already included in the pending mission list or the ongoing mission list, then the processor (130) may determine that the mission request is invalid. In a further example, if the processor (130) calculates, via a machine learning model, the similarity between the content of the mission and the content of a mission already included in the pending mission list or the ongoing mission list, and the similarity is at least a certain threshold, then it may determine that the mission request from the first user terminal is invalid.

According to one embodiment, the scheme by which the processor (130) receives a mission request from the first user terminal may be configured variously. For example, if the processor (130) receives a gift of a first type from the account of the first user terminal for the account of the host terminal (200), then it may determine that a mission request has been received. The scheme by which the processor (130) receives a funding participation request for a mission from the second user terminal may also be configured variously. For example, if the processor (130) receives a gift of a second type from the second user terminal's account for the mission, then it may determine that it has received a funding participation request for a mission; in this case, if the second user terminal is added as a participant in the mission funding, then the processor (130) may update the reward information by adding the reward corresponding to the second type of gift to the cumulative reward up to that point. By way of another example, if the processor (130) receives information about a funding amount for the mission from the second user terminal's account, then it may determine that it has received a funding participation request for a mission; in this case, if the second user terminal is added as a participant in the mission funding, then the processor (130) may update the reward information by adding the reward corresponding to the funding amount entered by the second user terminal's account to the cumulative reward up to that point.

According to one embodiment, the processor (130) receives an acceptance signal or an abandonment signal for a mission requested by a first user terminal from the host terminal (200); if an acceptance signal is received, then it may switch the mission from a pending mission list to an ongoing mission list assigned to the host terminal (200), and if an abandonment signal is received, it may delete the mission from the pending mission list. The processor (130) of the server (100) may provide mission reward information to terminals that are logged on to the session during the period in which the mission is included in the ongoing mission list or the pending mission list.

According to one embodiment, if the processor (130) receives a completion response from the host terminal (200) for a mission included in the ongoing mission list, then the processor may: process the mission for which the completion response has been received as completed; delete the completed mission from the ongoing mission list; or grant a reward corresponding to the reward information at the time of receiving the completion response for the mission to the account of the host terminal (200).

According to one embodiment, the processor (130) may receive a withdrawal request for a mission included in pending mission list from the first user terminal, and delete the mission for which the withdrawal request has been received from the pending mission list. The processor (130) may be configured so that the first user terminal cannot request withdrawal for a mission that the host terminal has accepted and is included in the ongoing mission list. This configuration may be implemented so that the processor (130) rejects a mission withdrawal request from the first user terminal, but it may also be implemented so that the first user terminal is not granted the authority to request withdrawal for a mission included in the ongoing mission list in the video intermediating service.

According to one embodiment, if the processor (130) receives a participation withdrawal request for a mission included in pending mission list from the second user terminal, then it may delete the second user terminal's account from the funding participants for the mission. Furthermore, in updating the mission's reward information, the processor (130) may, pursuant to a request from the second user terminal for withdrawal of participation, update the mission's reward information by a scheme of reverting the portion of the reward information that was updated when the second user terminal account was added as a funding participant for the mission to its state before the update. Depending on the embodiment, it may be possible for the second user terminal to request withdrawal of participation with the intent of withdrawing funding participation for a mission; however, it may not be possible for the second user terminal to request withdrawal of the mission itself. This may be implemented as a scheme in which the processor (130) rejects a mission withdrawal request from the second user terminal, but it may also be implemented so that the second user terminal is not granted the authority in the video intermediating service to request withdrawal with respect to the mission.

According to one embodiment, if a mission for the account of the host terminal (200) is completed, the processor (130) may provide a first graphic effect, configured according to a mission request of the first user terminal, to a terminal logged on to the session. Furthermore, if there is funding participation by a second user terminal in a completed mission and there is a second graphic effect configured according to a funding participation request of the second user terminal, the processor (130) may provide the second graphic effect to a terminal logged on to the session.

According to one embodiment, the processor (130) may sort a list of pending missions comprising one or more missions not yet accepted by the host terminal (200), based on at least one of: the reward of each mission included in the list of pending missions, the number of participating accounts, and the time at which the mission request for each mission was received.

According to one embodiment, the processor (130) may sort a list of ongoing missions comprising one or more missions that have been accepted by the host terminal (200), based on at least one of: the reward of each mission included in the list of ongoing mission, the number of participating accounts, and the time at which the acceptance signal for each mission was received.

According to one embodiment, the processor (130) may set a time limit for the host to accept the mission, starting from the time the mission is included in the pending mission list, pursuant to a mission request from the first user terminal. The time limit of the mission may be updated pursuant to the server (100) receiving a request to participate in funding the mission from a second user terminal.

According to one embodiment, the processor (130) stores a history of the host terminal (200) accepting missions or a history of the second user terminal participating in missions, and based on the history of the host terminal (200) accepting missions or the history of the second user terminal participating in missions, the processor may recommend a new mission to at least some of the host terminal (200) or the plurality of user terminals (300-1, 300-2, ..., 300-N).

According to one embodiment, the processor (130) stores a history of the host terminal (200) accepting missions or a history of the second user terminal participating in missions, and based on the history of the host terminal (200) accepting missions or the history of the second user terminal participating in missions, the processor may sort the pending mission list or the ongoing mission list.

The processor (130), which is connected to the memory (110) and the transceiver (120), may: establish a session for intermediating video between the host terminal (200) and the plurality of user terminals (300-1, 300-2, ..., 300-N); generate a mission for the account of the host terminal (200) at the request of the host terminal (200) and initialize the mission's reward information; receive a request to participate in funding the mission from one of the plurality of user terminals (300-1, 300-2, ..., 300-N); add the account of that user terminal as a funding participant of the mission; update the mission's reward information pursuant to the account of the corresponding user terminal being added as a funding participant of the mission; and, when the mission is completed, grant a reward corresponding to the reward information of the completed mission to the account of the host terminal (200).

FIG. 3 is a block diagram showing a terminal that manages a mission in a video intermediating service, according to one embodiment. The terminal in FIG. 3 may be a host terminal (200), or it may be a user terminal (300). The terminal (200, 300) according to an embodiment comprises a memory (210, 310) for storing commands, a transceiver (220, 320), an input/output interface (230, 330), and a processor (240, 340). The transceiver (220, 320) may transmit a video intermediating request to the server (100), receive video or voice intermediated via the server (100) from at least one terminal, or transmit video or voice input to the terminal to at least one terminal via the server (100). The input/output interface (230, 330) may input or output video or voice received externally.

### [Host Terminal in Video Intermediating Service]

According to one embodiment, the processor (240) in the host terminal (200) may receive input from the host via an input interface that comprises a camera (331), and may transmit an acceptance signal or an abandonment signal for the corresponding mission to the server (100). In addition, the processor (240) may receive and process information from the server (100) regarding the mission's success, abandonment, or failure, and provide the same to the host via an output interface that comprises a display (332) of the host terminal (200).

According to one embodiment, the processor (240) is connected to a memory (210), a transceiver (220), and an input/output interface (230), and may log on to a session established by the server (100) for intermediating video between the host terminal (200) and the plurality of user terminals (300-1, 300-2, ..., 300-N), and may transmit to the server (100) a request to generate a mission for the account of the host terminal (200).

According to one embodiment, after the server (100) generates a mission, if the processor (240) transmits a request for participation in a mission from a user terminal (300) to the server (100), then the processor (240) may receive updated reward information related to the mission from the server (100).

According to one embodiment, when transmitting and receiving video via a session, the processor (240) may establish a session and transmit/receive video by a peer-to-peer (P2P) communication scheme between user terminals participating in the session, without going through a server (100) as depicted in FIG. 1. In this case, because a separate intermediating server is not used for transmitting and receiving video, there are advantages including reduced latency in data transmission and reception, lower data traffic burden, and the ability to avoid resolution constraints caused by the intermediating server.

### [User Terminal in Video Intermediating Service]

In the present invention, "user terminal (300)" may refer to a first user terminal that directly requests the generation of a mission for a host terminal, or to a second user terminal that requests participation in funding a mission that has already been generated.

According to one embodiment, a processor (340) in a first user terminal is connected to a memory (310), a transceiver (320), and an input/output interface (330), and can: log on to a session established by a server (100) for intermediating video between a host terminal (200) and a plurality of user terminals (300-1, 300-2, ..., 300-N); and transmit a mission request for an account of the host terminal (200) to the server (100).

According to one embodiment, a processor (340) in a second user terminal is connected to a memory (310), a transceiver (320), and an input/output interface (330), and can: log on to a session established by a server (100) for intermediating video between a host terminal (200) and a plurality of user terminals (300-1, 300-2, ..., 300-N); and transmit a funding participation request for at least a portion of the mission generated for the account of the host terminal (200) to the server (100). In this case, the mission to which the funding participation is directed may be generated at the request of the host terminal (200), or generated at the request of a first user terminal among the plurality of user terminals (300-1, 300-2, ..., 300-N).

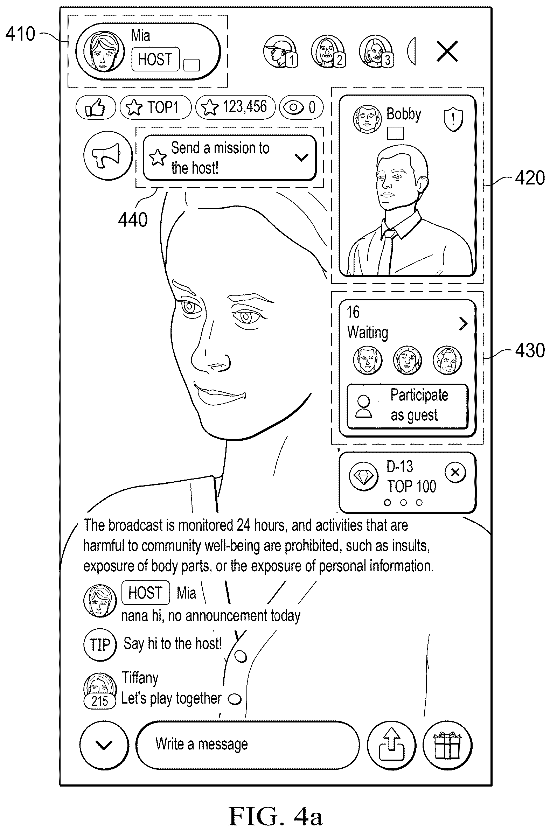

FIGS. 4a through 4h are exemplary drawings of a screen on a user terminal (300) on which video is intermediated according to one embodiment.

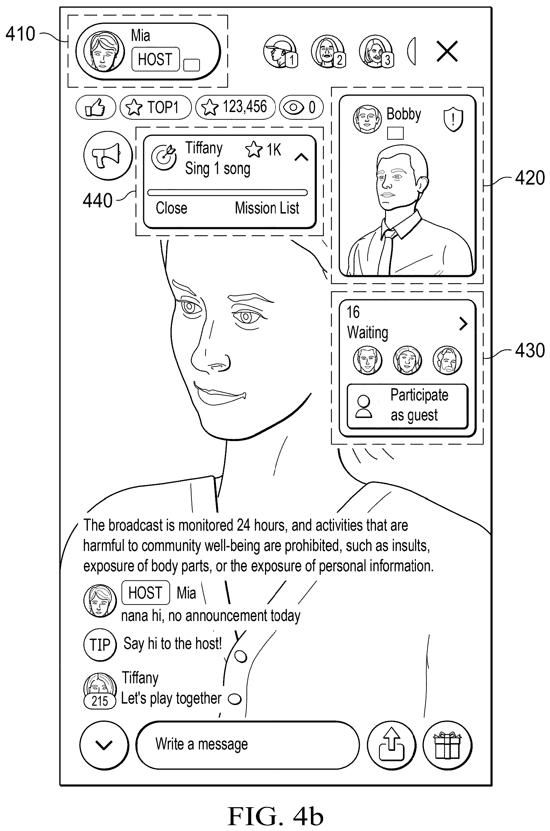

First, FIG. 4a shows a state in which there is no mission for the host terminal (200); FIG. 4b shows a state in which there is a mission. The screen of the user terminal (300) may emit video transmitted from the host terminal (200) to the server (100), and it may also display a first interface (410) showing the current host's account information, a second interface (420) emitting a guest's video separately from the host's video, and a third interface (430) displaying the profile of a user account waiting to become a guest. In the present invention, "guest" denotes a user who has participated in a session and whose video is displayed in a separate window from the host's video; a user other than a guest may be referred to as a "viewer." The mission for the host terminal (200) is displayed through the fourth interface (440); as depicted in FIG. 4a, if no mission has been generated or all missions are successful, abandoned, or failed, and thus no missions are currently assigned to the host terminal (200), a preset text (for example in FIG. 4a, a text encouraging mission requests) may be displayed on the fourth interface (440). If there is a mission assigned to the current host terminal (200), then as shown in FIG. 4b, the account name of the first user who requested the mission ("Tiffany"), the mission content ("Sing 1 song"), and information about the reward ("1000 stars") granted to the host terminal upon mission success may be displayed on the fourth interface (440). In addition, if the fourth interface (440) is in an expanded state as shown in FIG. 4b, then a button ("Close") for switching the fourth interface (440) to a collapsed state, and a button ("Mission List") for displaying a list of all missions currently assigned to the host terminal (200), may be displayed.

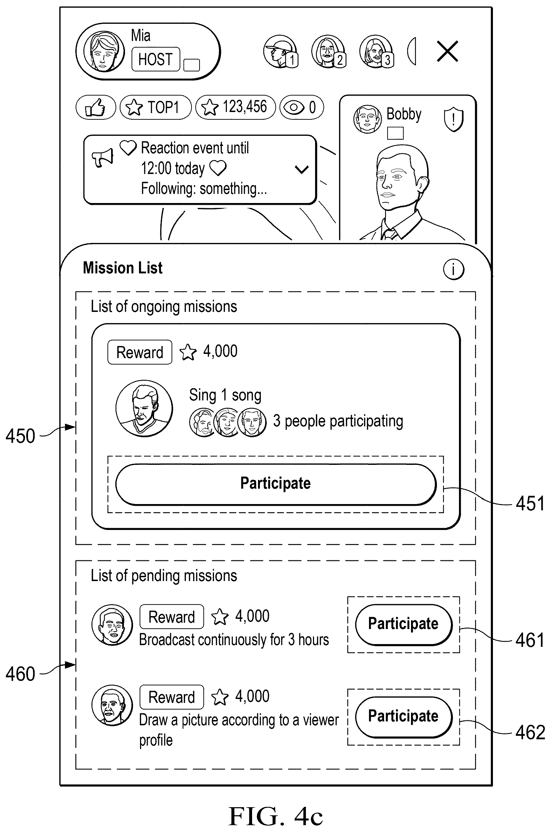

FIG. 4c shows a screen in which the "Mission List" button has been selected and a mission list is displayed in the form of a bottom sheet. The mission list may be divided into an ongoing mission list (450) and a pending mission list (460); in the present invention, "ongoing mission list" refers to a list of missions accepted by the host and assigned to the host terminal, and "pending mission list" refers to a list of missions awaiting acceptance by the host. According to one embodiment, the second user terminal may select a participation button (451) in the ongoing mission list (450) to transmit a request to participate in funding an ongoing mission to the server (100), or select a participation button (461 or 462) in the pending mission list (460) to transmit a request to participate in funding a pending mission to the server (100). However, the first user terminal may be unable to participate in funding the mission it requested. Specifically, in FIG. 4c, the user who requested the ongoing "Sing 1 song" mission is the first user for that mission, and the second user for the "Broadcast continuously for 3 hours" or "Draw a picture based on a viewer profile" missions; consequently, it cannot participate in funding via the participation button (451) above, but may participate in funding via the participation button (461 or 462) below. In addition, according to one embodiment, there may be a respective limit on the number of missions in the ongoing mission list and the pending mission list. For example, the ongoing mission list may include up to 2 missions, and the pending mission list may include up to 3 missions. According to another embodiment, there may also be limit to the total number of missions, which may include the ongoing mission list and the pending mission list. For example, the total number of ongoing missions and pending missions may be limited to no more than 3.

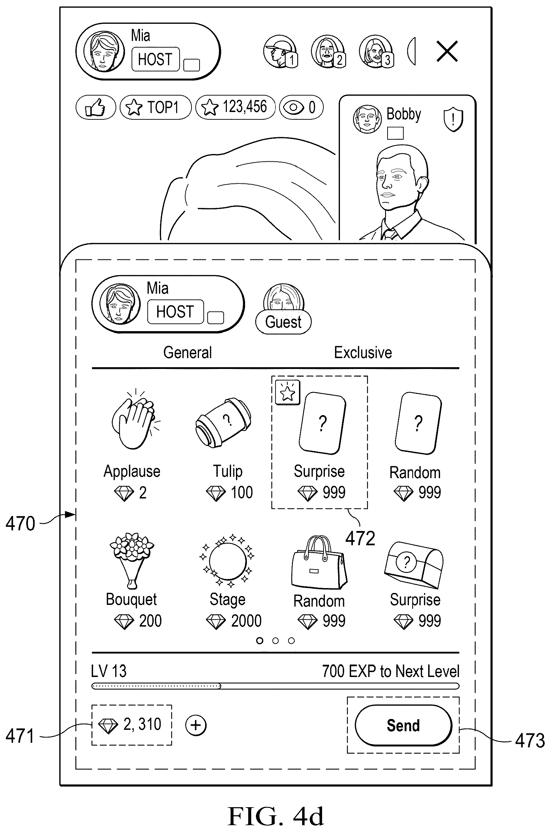

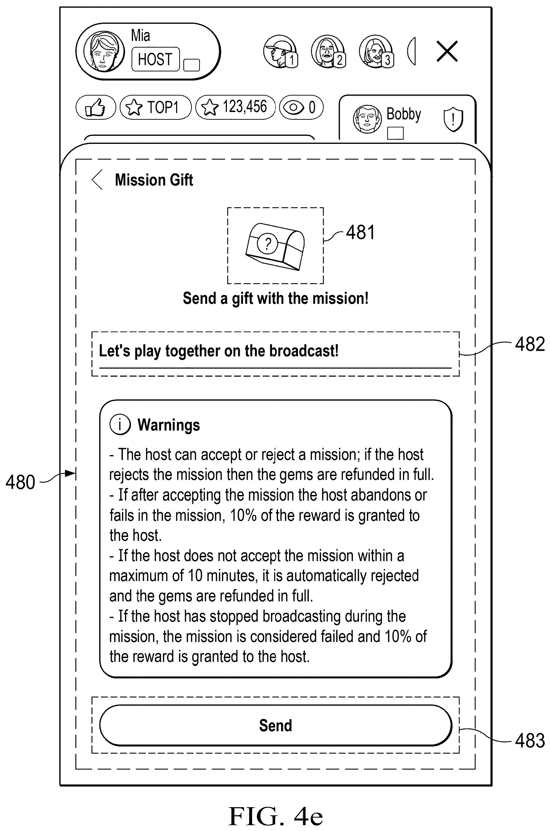

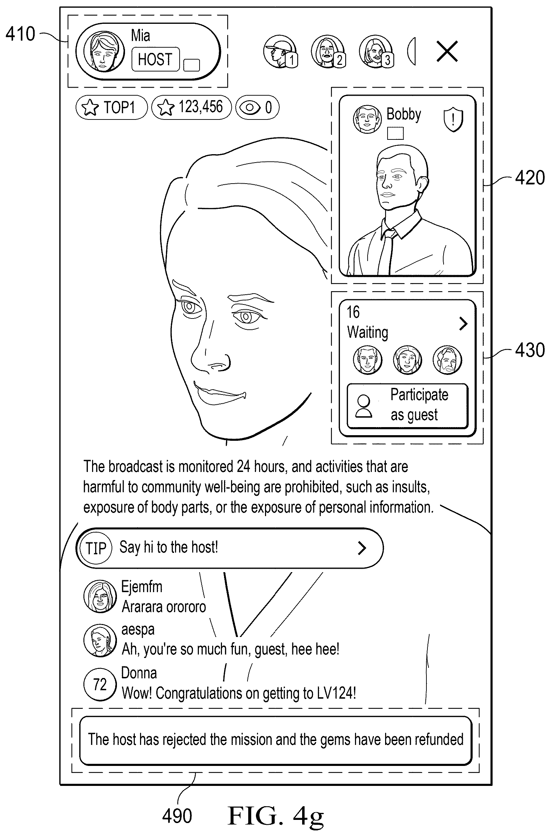

FIG. 4d shows a screen (470) in which the user account selects a gift to transmit to the host account in the form of a mission request or funding participation request. This screen may also be displayed upon selection of the gift icon shown in the bottom right corner of FIG. 4a or FIG. 4b. A gift may be classified as a "Mission Gift" by which a mission may be requested, or as a "General Gift" by which it is possible to participate in funding. Separately from this, a gift may also be classified as a "General Gift" that another user account may duplicate, or as an "Exclusive Gift" that cannot be duplicated. The gift selection screen (470) may display the payments (471) held by the user account. The payments (referred to as "gems" in FIG. 4e and FIG. 4g) are used to purchase gifts; they may have a 1:1 correspondence with the rewards granted to the host terminal upon successful missions; they may have a fixed exchange rate that is not 1: 1; or they may have a variable exchange rate. Among the gifts, there may be some gifts (472) with added graphic effects. If a user account purchases such a gift (472) to request a mission or participate in funding, then the graphic effect added to that gift (472) may be displayed on the screen of the host terminal (200) or the user terminal (300) when the host account completes the mission. Gifts may be purchases and transmitted by selecting the send button (473).

FIG. 4e shows a screen (480) in which mission information is input so as to proceed with purchasing and transmitting a gift. This screen (480) may also be displayed when the send button (473) in FIG. 4d is selected. The image (481) of the gift that the user account selected on the previous screen (470) may be displayed on this screen (480). In addition, if the gift the user account has selected is a "Mission Gift" by which a mission may be requested, then the screen (480) may display a region (482) in which the desired mission information may be entered. Depending on the embodiment, not only text but also emoticons, special characters, and the like, may be entered in this region (482). In addition, the screen (480) may display precautions for the user to consult before making a mission request or funding participation request; the user may proceed with final purchase and transmission of the selected gift by selecting the send button (483).

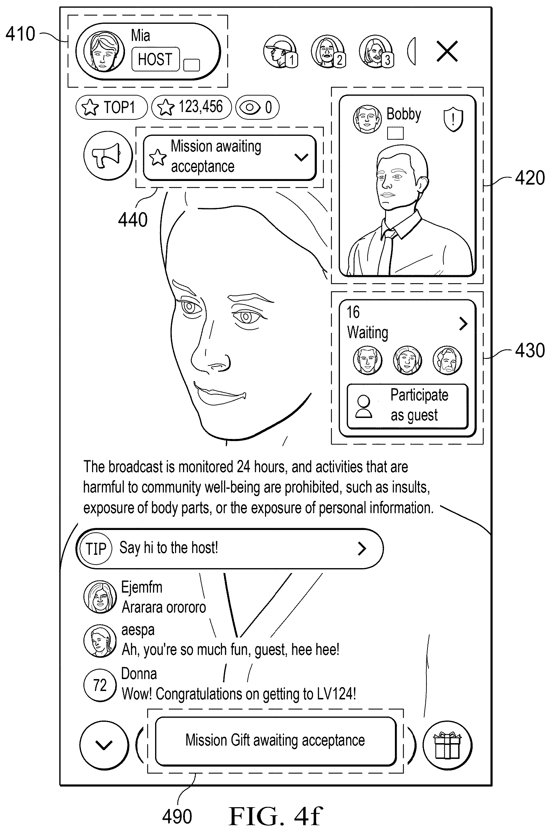

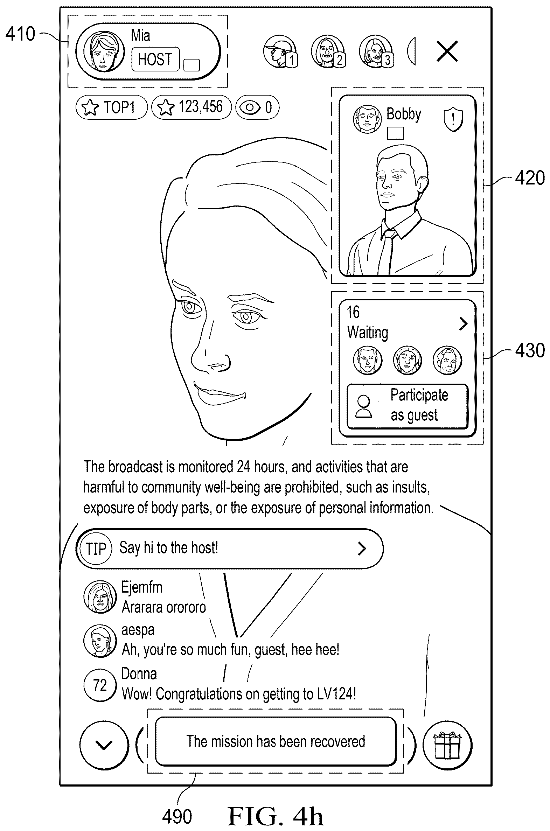

FIG. 4f shows the screen of the user terminal (300) after the user account has transmitted a mission gift. At the bottom of this screen, a message box (490) may be displayed, indicating that the terminal is waiting for an acceptance signal for the mission from the host terminal (200) (in other words, awaiting acceptance of the mission gift by the host account). FIG. 4g shows the user terminal screen in the event that a mission abandonment (or rejection) signal is received from the host terminal (200); at the bottom of the screen, a message box (490) may be displayed that informs the user that the host account has rejected the mission, and the payment (gems) used to purchase the mission gift has been refunded. The first user who requested the mission may withdraw (or recover) the mission it requested by transmitting a withdrawal (or recovery) request to the server (100). FIG. 4h shows a screen in the event that a mission has been recovered; a message box (490) may be displayed at the bottom of the screen to indicate that the mission has been recovered. If a mission is recovered, then the payment (gems) used for purchasing the mission gift for that mission may be refunded to the first user's account.

It should be noted that the format, arrangement, design, and interaction relationships of the screen interface described with reference to FIGS. 4a to 4h hereinabove are illustrative, and depending on the embodiment, these may be implemented in various ways.

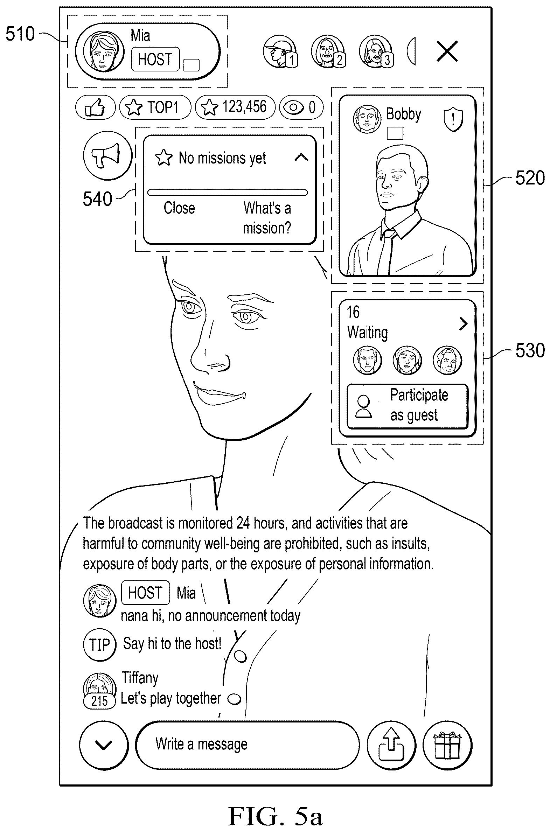

FIGS. 5a through 5g are exemplary drawings of screens of a host terminal (200) in which video is being intermediated according to one embodiment.

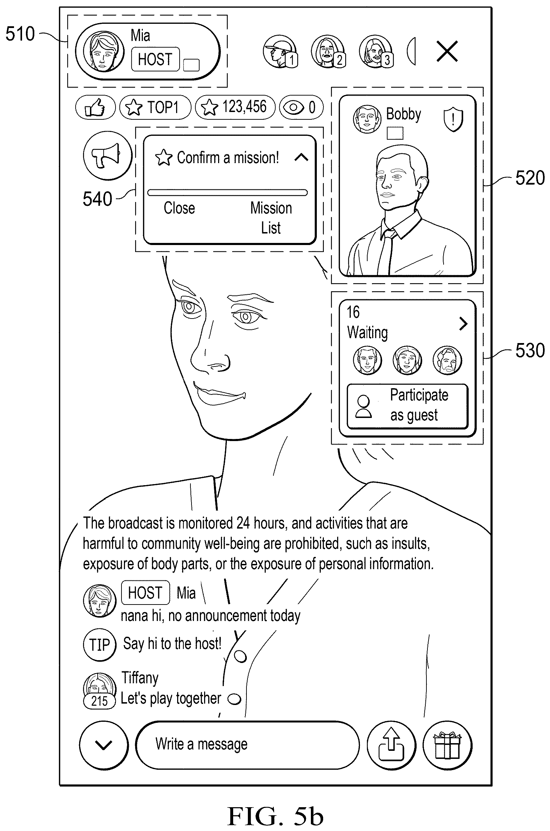

First, FIG. 5a shows a state in which there is no mission for the host terminal (200); FIG. 5b shows a state in which there is a mission. The screen of the host terminal (200) may emit video transmitted from the host terminal (200) to the server (100), and it may also display a first interface (510) showing the current host's account information, a second interface (520) emitting a guest's video separately from the host's video, and a third interface (530) displaying the profile of a user account waiting to become a guest. The mission for the host terminal (200) is displayed through a fourth interface (540); as depicted in FIG. 5a, if no mission has been generated or all missions are successful, abandoned, or failed, and thus no missions are currently assigned to the host terminal (200), a preset text (for example in FIG. 5a, a text indicating that there are no missions) may be displayed on the fourth interface (540). If there is a mission assigned to the current host terminal (200), then a message requesting confirmation of the assigned mission may be displayed on the fourth interface (540) as shown in FIG. 5b. In addition, if the fourth interface (540) is in an expanded state as shown in FIG. 5b, then a button ("Close") for switching the fourth interface (540) to a collapsed state, and a button ("Mission List") for displaying a list of all missions currently assigned to the host terminal (200), may be displayed.

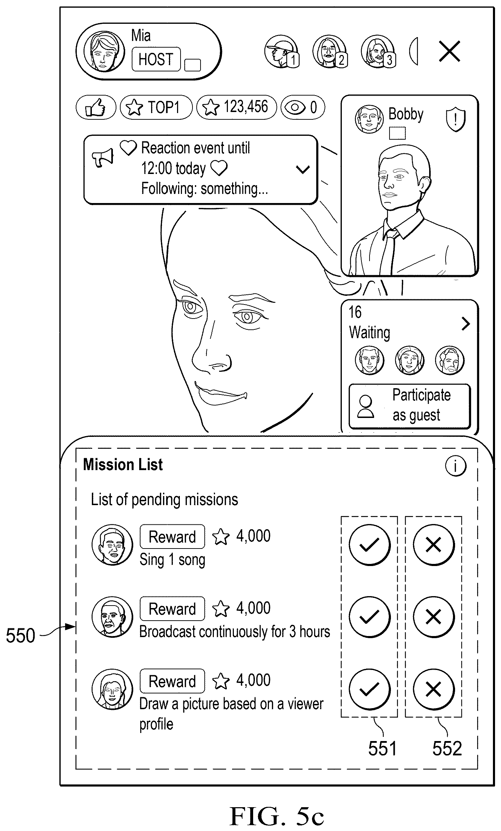

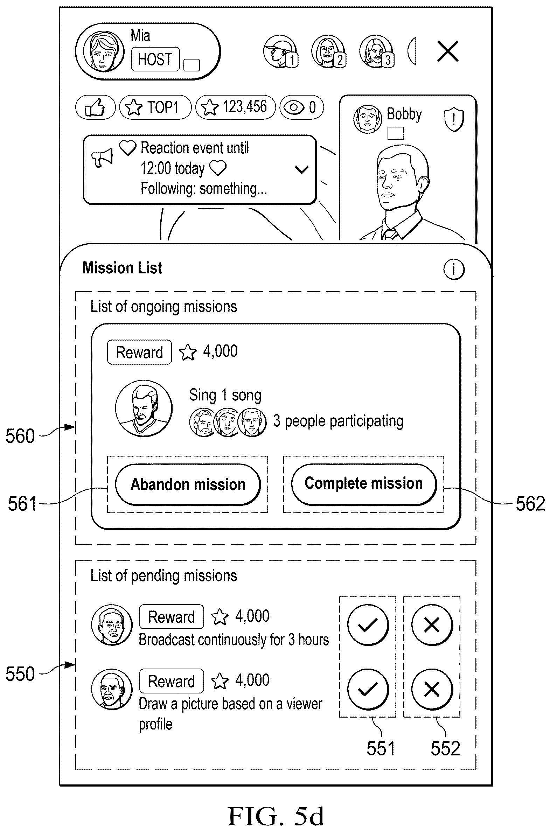

FIGS. 5c and 5d show a screen in which the "Mission List" button has been selected and a mission list is displayed in the form of a bottom sheet. FIG. 5c shows the screen when there is only a pending mission list (550); FIG. 5d shows the screen when there are both a pending mission list (550) and an ongoing mission list (560). According to one embodiment, the host terminal (200) may select an acceptance button (551) in the pending mission list (550) to transmit an acceptance signal for a pending mission to the server (100), or it may select an abandonment button (552) to transmit an abandonment signal to the server (100). Additionally, the host terminal (200) may select an abandonment button (561) to transmit an abandonment signal to the server (100) for a mission already accepted and included in the ongoing mission list (560), or it may select a success button (562) to transmit a signal requesting the server (100) to grant a reward. If a plurality of missions are included in the ongoing mission list (560), then upon receiving a gesture input (for example a slide input), the host terminal (200) may display the remaining ongoing missions in addition to the ongoing missions currently displayed on the screen.

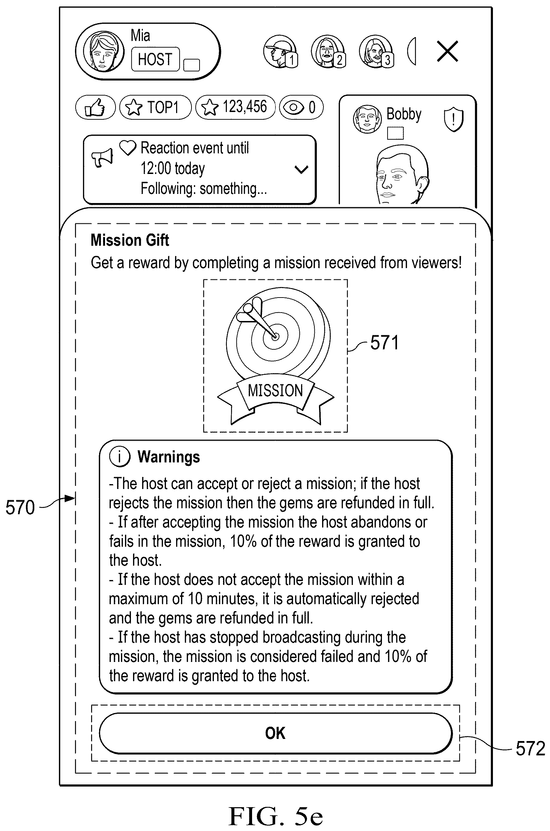

FIG. 5e shows an illustrative screen layout with a bottom sheet displayed when there is no mission for the host; this screen may also be displayed when the "What's a mission?" button in the fourth interface (540) of FIG. 5a is selected. The screen may display an image (571) of the basic graphic effect displayed on the screen when the mission is successful, and may provide precautions for the host to consult before accepting the mission; if the host selects the confirmation button (572), the bottom sheet may be closed.

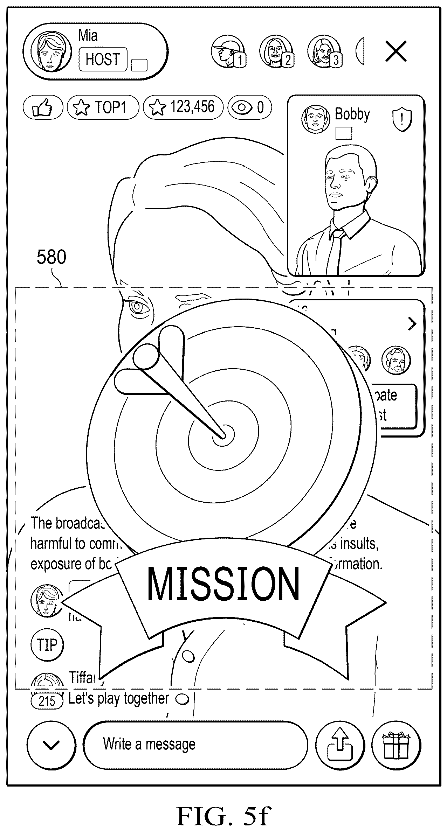

FIG. 5f shows a screen of the host terminal (200) in the event of mission success. The graphic effect (580) displayed on the screen is a graphic effect configured pursuant to the input made by the first user terminal for the mission request; it may be a graphic effect that is provided equally when any mission is successful, but depending on the embodiment, it may also be a graphic effect that changes according to the type of mission gift the first user transmitted to the host account. In addition, if the graphic effect (580) is temporarily displayed and then disappears, then a second graphic effect may subsequently be displayed that is configured according to the input made by the second user terminal for the funding participation request. According to one embodiment, if the number of second graphic effects to be displayed subsequently is at least a certain number, then the server (100) may limit the number or timing of the second graphic effects displayed on the screen to no more than a certain reference value, to prevent excessive graphic effects from interfering with video viewing. Additionally, depending on the embodiment, even while the first graphic effect or the second graphic effect is being provided, if an external input to the host terminal (200) is detected or an input to the user terminal (300) is detected, the graphic effect may disappear at once.

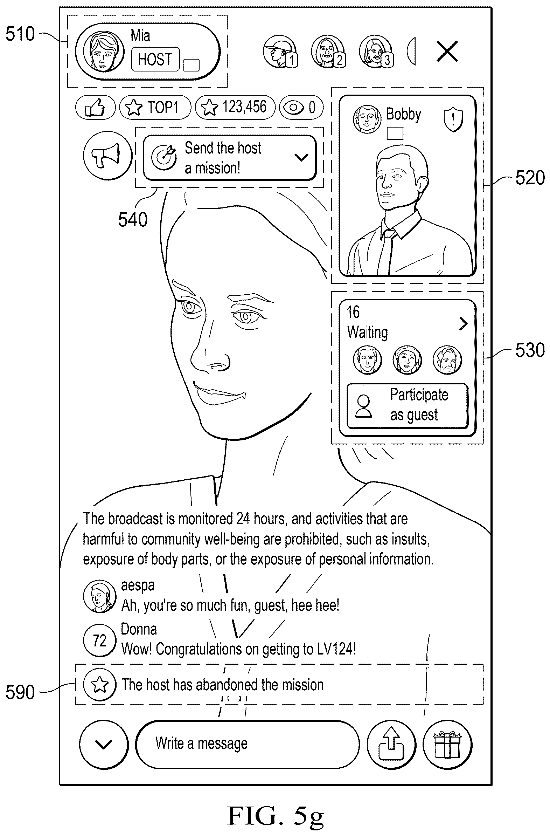

FIG. 5g shows the screen of the host terminal (200) in the event that the host has abandoned the mission and there are no currently pending or ongoing missions. At the bottom of the screen, a text (590) may be provided to indicate to the user that the host has abandoned the mission. This text (590) may be provided in the form of a chat message, or it may be provided in the form of a message box that appears temporarily and then disappears. In addition, this text (590) may also be provided on the screen of the user terminal (300).

It should be noted that the format, arrangement, design, and interaction relationships of the screen interface described with reference to FIGS. 5a to 5g hereinabove are illustrative, and depending on the embodiment, may be implemented in various ways.

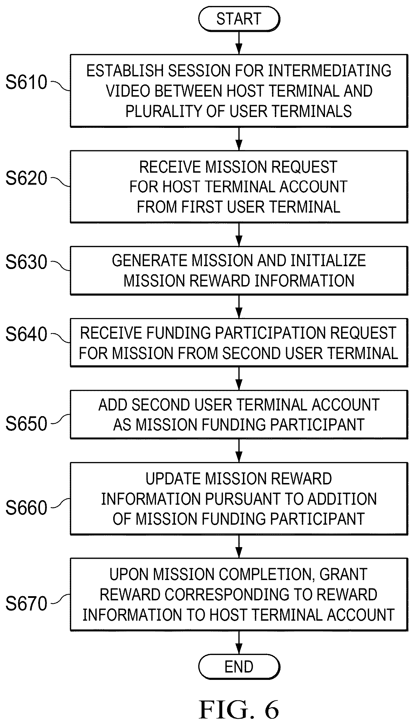

FIG. 6 is a flowchart illustrating a mission management method on a server according to one embodiment. The method depicted in FIG. 6 may for example be carried out by the above-described server (100).

In step S610, the server may establish a session for intermediating video between a host terminal and a plurality of user terminals.

In step S620, the server may receive a mission request from a first user terminal among the plurality of user terminals, directed to the account of the host terminal.

In step S630, the server may generate a mission based on the mission request from the first user terminal, and may initialize the mission's reward information.

In step S640, the server may receive a funding participation request for a mission from a second user terminal among the plurality of user terminals.

In step S650, the server may add the account of the second user terminal as a funding participant for the mission.

In step S660, the server may update the mission's reward information pursuant to the second user terminal's account being added as a funding participant for the mission.

In step S670, if the mission is complete, the server may grant a reward corresponding to the completed mission's reward information to the host terminal's account.

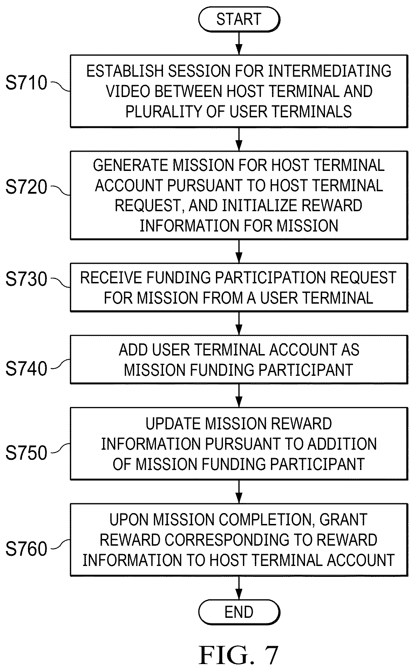

FIG. 7 is a flowchart illustrating a mission management method on a server according to another embodiment. The method depicted in FIG. 7 may for example be carried out by the above-described server (100).

In step S710, the server may establish a session for intermediating video between a host terminal and a plurality of user terminals.

In step S720, pursuant to a host terminal request, the server may generate a mission directed to the host terminal's account and initialize the mission's reward information.

In step S730, the server may receive a funding participation request for the mission from one user terminal among the plurality of user terminals.

In step S740, the server adds the account of the user terminal that transmitted the funding participation request as a funding participant for the mission.

In step S750, the server may update the reward information pursuant to the user terminal's account being added as a funding participant for the mission.

In step S760, if the mission is complete, the server may grant a reward corresponding to the completed mission's reward information to the host terminal's account.

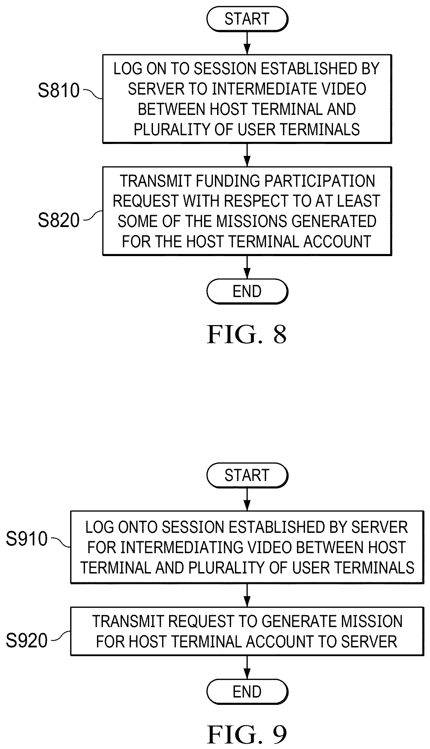

FIG. 8 is a flowchart illustrating a mission management method on a user terminal according to one embodiment. The method depicted in FIG. 8 may for example be carried out by an above-described user terminal (300-N).

In step S810, the user terminal may log on to a session established by the server for the purpose of intermediating video between the host terminal and a plurality of user terminals.

In step S820, the user terminal may transmit a funding participation request to the server for at least some of the missions generated for the host terminal's account.

FIG. 9 is a flowchart illustrating a mission management method on a host terminal according to one embodiment. The method depicted in FIG. 9 may for example be carried out by the above-described host terminal (200).

In step S910, the host terminal may log on to a session established by the server for intermediating video between the host terminal and a plurality of user terminals.

In step S920, the host terminal may transmit to the server a request to generate a mission for the account of the host terminal.

In the flowchart depicted above, the method is described as being divided into a plurality of steps; however, at least some of the steps may be carried out in a different order, carried out in combination with other steps, omitted, carried out divided into sub-steps; or one or more steps not shown may also be carried out.

The apparatus according to the above-described embodiment may comprise: a processor, a memory for storing and executing program data, a permanent storage such as a disk drive, a communication port that communicates with an external device, a touch panel, a key, a user interface device such as a button, or the like. Methods that are implemented as software modules or algorithms may be stored on a computer-readable recording medium as computer-readable codes or program commands that may be executed by the processor. Computer-readable recording media include magnetic storage media (for example read-only memory (ROM), random-access memory (RAM), floppy disks, hard disks, and the like) and optical reading media (for example CD-ROM, Digital Versatile Disc (DVD)), and the like. The computer-readable recording medium is distributed in computer systems connected via a network so that computer-readable codes may be stored and executed in a distributed manner. The medium is readable by a computer, and may be stored in the memory and executed by the processor.

The present embodiment may be represented by functional block configurations and various processing steps. Such functional blocks may be implemented as any number of various hardware and/or software configurations that execute the particular functions. For example, the embodiment may use integrated circuit configurations, such as memory, processing, logic, look-up tables, and the like, that may execute various functions under the control of one or more microprocessors or other control devices. Similarly to how the components may be implemented as software programs or software elements, the present embodiment may be implemented in a programming or scripting language such as C, C++, Java, assembler, or the like, comprising various algorithms implemented as a combination of data structures, processes, routines or other programming constructs. Functional aspects may be implemented as algorithms executed on one or more processors. Additionally, in the present embodiment, conventional techniques may be used for electronic environment settings, signal processing, message processing, and/or data processing and the like. Such terms as "mechanism," "element," "means," and "configuration" may be used broadly and are not limited to mechanical and physical configurations. The above terms may encompass the meaning of a series of software processes (routines) in association with a processor or the like.

The above-described embodiments are only illustrative examples, and other embodiments may be implemented within the scope of the claims set forth below.

## Claims

1. A mission management method carried out on a server that provides a video intermediating service,
comprising:
a step wherein a session for intermediating video is established between a host terminal and a plurality of user terminals;
a step wherein a mission request is received with respect to an account of the host terminal from a first user terminal among the plurality of user terminals;
a step wherein a mission is generated based on the mission request, and the mission's reward information is initialized;
a step wherein a request to participate in funding the mission is received from a second user terminal among the plurality of user terminals;
a step wherein an account of the second user terminal is added as a funding participant of the mission;
a step wherein the reward information is updated owing to the adding of a funding participant of the mission;
and a step wherein, if the mission is completed, then a reward is granted to the host terminal account that corresponds to the reward information.

2. The mission management method according to Claim 1,
wherein
the step wherein the mission request is received comprises:
a step wherein a first type of gift for the account of the host terminal is received from the account of the first user terminal.

3. The mission management method according to Claim 1,
wherein
the step wherein the funding participation request for the mission is received comprises:
a step wherein a second type of gift for the mission is received from the account of the second user terminal, and
the step wherein the reward information is updated comprises:
a step wherein rewards are summed corresponding to the gifts of the second type accumulated thus far.

4. The mission management method according to Claim 1,
wherein
the step wherein the funding participation request for the mission is received comprises:
a step wherein information regarding a funding amount entered from the second user terminal account for the mission is received, and
the step wherein the reward information is updated comprises:
a step wherein rewards are summed corresponding to the thus entered amounts of funding that have been accumulated thus far.

5. The mission management method according to Claim 1,
further comprising:
a step wherein a request for withdrawal of participation in the mission is received from the second user terminal; and
a step wherein the account of the second user terminal is deleted from the funding participants of the mission.

6. The mission management method according to Claim 5,
wherein
the step of updating the reward information comprises:
a step wherein, in response to the participation withdrawal request, the portion of the reward information that was updated when the second user terminal account was added as a funding participant of the mission is reverted to its state before the update.

7. The mission management method according to Claim 1,
wherein
the reward information
is provided by the server to terminals logged on to the session during the period in which the mission is included in a list of ongoing missions or a list of pending missions.

8. The mission management method according to Claim 1,
further comprising:
a step wherein an acceptance signal or an abandonment signal for the mission is received from the host terminal;
a step wherein if the acceptance signal is received, then the mission is switched from a pending mission list to an ongoing mission list; and
a step wherein if the abandonment signal is received, the mission is deleted from the pending mission list.

9. The mission management method according to Claim 1,
further comprising
a step wherein it is determined whether the mission request is valid,
wherein this determining step comprises:
a step wherein, if no new missions can be added to the pending mission list and the ongoing mission list, or the content of the mission overlaps with the content of a mission that is already included in the pending mission list or the ongoing mission list by at least a certain amount, then it is determined that the mission request is invalid.

10. The mission management method
according to Claim 1,
wherein the granting step comprises:
a step wherein a completion response for a mission included in the ongoing mission list is received from the host terminal; and
a step wherein a reward is granted to the host terminal account that corresponds to the reward information at the time of receiving the completion response.

11. The mission management method according to Claim 1,
further comprising:
a step wherein a request for withdrawal from a mission included in the pending mission list is received from the first user terminal; and
a step wherein the mission is deleted from the pending mission list.

12. The mission management method
according to Claim 1,
further comprising a step wherein, if the mission is completed, then a first graphic effect configured according to the mission request of the first user terminal is provided to a terminal logged on to the session.

13. The mission management method
according to Claim 1,
wherein the pending mission list
is sorted based on at least one of the reward of each mission included in the pending mission list, the number of participating accounts, and the time point at which a mission request for each mission was received, and
the ongoing mission list
is sorted based on at least one of the reward of each mission included in the ongoing mission list, the number of participating accounts, and the time point at which an acceptance signal for each mission was received.

14. The mission management method
according to Claim 1,
wherein
according to the mission request of the first user terminal, a time limit is set for the mission in which the host can accept the mission, starting from the time the mission is included in the pending mission list, and
the time limit of the mission
is updated if the server receives a funding participation request for the mission from the second user terminal.

15. The mission management method
according to Claim 1,
further comprising: a step wherein a history of host terminal mission acceptances or a history second user terminal mission participations is stored;
and a step wherein, based on the host terminal mission acceptance history or the second user terminal mission participation history, a new mission is recommended to at least a portion of the host terminal or the plurality of user terminals, or the list of pending missions or the list of ongoing missions is sorted.

16. A mission management method carried out on a server that provides a video intermediating service,
comprising:
a step wherein a session for video intermediating is established between a host terminal and a plurality of user terminals;
a step wherein, in accordance with the request of the host terminal, a mission is generated and reward information for the mission is initialized;
a step wherein a funding participation request for the mission is received from a user terminal among the plurality of user terminals;
a step wherein an account of the user terminal is added as a funding participant of the mission;
a step wherein the reward information is updated owing to the adding of the funding participant of the mission;
and a step wherein, when the mission is completed, a reward is granted to the host terminal account that corresponds to the reward information.

17. A mission management method performed on a host terminal using a video intermediating service,
comprising:
a step of logging on to a session established by a server for intermediating video between a host terminal and a plurality of user terminals; and
a step wherein a request is transmitted to the server to generate a mission for an account of the host terminal.

18. A mission management method performed on a user terminal using a video intermediating service,
comprising:
a step of logging on to a session established by a server for intermediating video between a host terminal and a plurality of user terminals; and
a step wherein a funding participation request for at least some of the missions generated for the account of the host terminal is transmitted to the server.

19. A server that manages missions in a video intermediating service,
comprising a transceiver, a memory that stores commands, and a processor:
wherein the processor is configured to: connect to the transceiver and the memory, and
establish a session for intermediating video between a host terminal and a plurality of user terminals;
receive a mission request with respect to an account of the host terminal from a first user terminal among the plurality of user terminals;
generate a mission based on the mission request and initialize the mission's reward information;
receive a funding participation request for the mission from a second user terminal among the plurality of user terminals;
add an account of the second user terminal as a funding participant of the mission;
update the reward information according to the adding of the funding participant of the mission; and
when the mission is completed, grant a reward to the host terminal account that corresponds to the reward information.

20. A server that manages missions in a video intermediating service,
comprising a transceiver, a memory that stores commands, and a processor:
wherein the processor is configured to: connect to the transceiver and the memory, and
establish a session for intermediating video between a host terminal and a plurality of user terminals;
generate a mission according to the mission request and initialize the mission's reward information;
receive a funding participation request for the mission from a user terminal among the plurality of user terminals;
add an account of the user terminal as a funding participant of the mission;
update the reward information according to the adding of the funding participant of the mission; and
when the mission is completed, grant a reward to the host terminal account that corresponds to the reward information.
